# EUROPÄISCHE PATENTANMELDUNG

(11) **EP 1 972 481 A1**
(43) Veröffentlichungstag der Anmeldung: **24.09.2008**
(21) Anmeldenummer: 07005675.9
(22) Anmeldetag: 20.03.2007
(51) Int. Cl.: B60K 6/36

(54) **Verfahren zum Betrieb eines Hybridantriebssystems sowie Hybridsantriebssystem mit zwei Teilgetrieben**

(71) Anmelder: FEV Motorentechnik GmbH, 52078 Aachen (DE)
(72) Erfinder: Leufgen, Werner, 50226 Frechen (DE)
(74) Vertreter: Neumann, Ernst Dieter

(57) **Zusammenfassung**

Hybridantriebssystem mit einer Hauptantriebsmaschine 11 - insbesondere einem Verbrennungsmator - und einer Zusatzantriebsmaschine 12 - insbesondere einer elektrischen Maschine - für ein Kraftfahrzeug, umfassend
ein erstes Gangschaltteilgetriebe 15 mit einer Eingangswelle 17 und einer Abtriebswelle 23 und einer ersten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle 17 mit der Hauptantriebsmaschine 11 koppelbar ist,
ein zweites Gangschaltteilgetriebe 16 mit einer Eingangswelle 18 und einer Abtriebswelle 24 und einer zweiten Gruppe von Gangschaltzahnradpaaren mit jeweils einem mit seiner Welle drehfest verbundenen Zahnrad und einem schaltbar mit seiner Welle koppelbaren Schaürad, dessen Eingangswelle 18 mit der Zusatzantriebsmaschine 12 in fester Übersetzung gekoppelt ist, wobei die Gangschaltzahnradpaare in der Gangfolge jeweils abwechselnd einem der Gangschattteitgetriebe 15, 16 zugeordnet sind und die beiden Eingangsurellen 17, 18 über eine Kupplungseinheit 29 drehfest miteinander verbindbar sind, wobei im Betrieb ausschließlich mit der Hauptantriebsmaschine 11 ein Gangwechsel zwischen zwei in der Gangfolge benachbarten Gängen mit einem Wechsel des Drehmomentflusses von einem Gangschaltteügetriebe 15 zum anderen Gangschaltteilgetriebe 16 dargestellt wird.

## Beschreibung

Die Erfindung betrifft ein Verfahren zum Betrieb eines Hybridantriebssystems sowie ein Hybridantriebssystem mit einer Hauptantriebsmaschine, insbesondere einem Verbrennungsmotor, und einer Zusatzantriebsmaschine, insbesondere einer elektrischen Maschine, für ein Kraftfahrzeug. Andere Typen der Antriebsmaschinen sind nicht ausgeschlossen. Beispielsweise können zwei elektrische Maschinen als Haupt- und Zusatzantriebsmaschine vorgesehen sein oder neben einem Verbrennungsmotor als Hauptantriebsmaschine eine hydraulische Maschine als Zusatzantriebsmaschine.

Fahrzeuge mit Hybridantrieb in den unterschiedlichsten Ausführungen haben bei bestimmten Fahrzyklen ein günstigeres Abgasverhalten als Fahrzeuge, die ausschließlich verbrennungsmotorisch angetrieben werden. Sie gewinnen daher am Markt zunehmende Bedeutung.

Wird eine elektrische Maschine als Zusatzantriebsmaschine verwendet, kann diese als Motor und Generator verwendet werden. In der Motorfunktion, die die Versorgung durch eine Batterie bedingt, ist ein Anlassen eines Verbrennungsmotors oder eine Verwendung als Fahrantriebsmotor möglich. In der Verwendung als Generator dient sie zum Aufladen der Batterie, wobei die Energie vom Verbrennungsmotor oder aus der Rückgewinnung der kinetischen Fahrzeugenergie bezogen werden kann.

Hybridantriebssysteme sind beispielsweise in der WO 20051073005 A1, der DE 100 49 514 A1 und der DE 198 18 108 A1 beschrieben.

Aus der DE 199 60 621 A1 ist ein Hybridantrieb für Fahrzeuge mit einem schaltbaren Getriebe bekannt, das ein erstes schaltbares Teilgetriebe enthält, das wahlweise mit einem Brennstoffmotor und/oder einer elektrischen Maschine antriebsmäßig verbindbar ist, und ein zweites schaltbares Teilgetriebe enthält, das antriebsmäßig mit der elektrischen Maschine verbunden ist, welche als Elektromotor oder Generator betreibbar ist. Das erste Teilgetriebe umfaßt eine erste Vorgelegewelle und eine Abtriebswelle und weist sechs Gangstufen auf; das zweite Teilgetriebe umfaßt eine zweite Vorgelegewelle und die gleiche Abtriebswelle und weist drei Gangstufen auf.

Hiervon ausgehend liegt der vorliegenden Erfindung die Aufgabe zugrunde, ein Verfahren zum Betrieb eines Hybridantriebssystems vorzuschlagen, mit dem eine vereinfachte Bauweise ermöglicht wird, sowie ein Hybridantriebssystem bereitzustellen, das sich durch einen vereinfachten Aufbau im Verhältnis zur Zahl der Gangstufen, die zur Verfügung stehen, auszeichnet. Hierbei soll insbesondere auch eine kompakte Bauweise für den Quereinbau in Kraftfahrzeugen möglich sein.

Die Lösung liegt in einem Verfahren zum Betrieb eines Hybridantriebssystems mit einer Hauptantriebsmaschine - insbesondere einem Verbrennungsmotor - und einer Zusatzantriebsmaschine - insbesondere einer elektrischen Maschine - für ein Kraftfahrzeug, umfassend
ein erstes Gangschaftteilgetriebe mit einer Eingangswelle und einer Abtriebswelle und einer ersten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle mit der Hauptantriebsmaschine koppelbar ist,
ein zweites Gangschaltteilgetriebe mit einer Eingangswelle und einer Abtriebswelle und einer zweiten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle (18) mit der Zusatzantriebsmaschine antriebsverbunden ist,
wobei die beiden Eingangswellen über eine Kupplungseinheit drehfest miteinander verbindbar sind, wobei im Betrieb ausschließlich mit der Hauptantriebsmaschine ein Gangwechsel zwischen zwei in der Gangfolge benachbarten Gängen jeweils mit einem Wechsel des Drehmomentflusses von einem Gangschaltteilgetriebe zum anderen Gangschaltteilgetriebe dargestellt wird.

Hierbei ist weiterhin bevorzugt vorgesehen, daß im Betrieb ausschließlich mit der Zusatzantriebsmaschine ein Gangwechsel zwischen zwei in der Gangfolge benachbarten Gängen jeweils durch einen Wechsel des Drehmomentflusses von einem Gangschaltteilgetriebe zum anderen Gangschaltteügetriebe verwirklicht wird. Hiermit ist es möglich, die Zahl der Gangschaltzahnradpaare in beiden Gangschaltteilgetrieben zusammen auf die Zahl der erforderlichen Gangstufen zu beschränken.

Die Lösung liegt weiterhin in einem Hybridantriebssystem mit einer Hauptantriebsmaschine - insbesondere einem Verbrennungsmotor - und einer Zusatzantriebsmaschine - insbesondere einer elektrischen Maschine - für ein Kraftfahrzeug, umfassend ein erstes Gangschaltteilgetriebe mit einer Eingangswelle und einer Abtriebswelle und einer ersten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle mit der Hauptantriebsmaschine koppelbar ist,
ein zweites Gangschaltteilgetriebe mit einer Eingangswelle und einer Abtriebswelle und einer zweiten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle mit der Zusatzantriebsmaschine antriebsverbunden gekoppelt ist, wobei die Gangschaltzahnradpaare in der Gangfolge jeweils abwechselnd einem der Gangschaltteilgetriebe zugeordnet sind und die beiden Eingangswellen über eine Kupplungseinheit drehfest miteinander verbindbar sind.

Der wesentliche Lösungsansatz liegt in der Darstellung des verwendeten Getriebes durch zwei Teilgetriebe, deren Gangstufen wechselweise verteilt sind, also erster, dritter, fünfter Gang werden dem Teilgetriebe zugeordnet, das mit der Hauptantriebsmaschine, dem Verbrennungsmotor, koppelbar ist, und die Gangstufen zweiter, vierter und sechster Gang werden dem Teilgetriebe zugeordnet, das fest an die Zusatzantriebsmaschine, also die elektrische Maschine, angekoppelt ist.

Hiermit steht der erste Gang zum Anfahren im verbrennungsmotorischen Betrieb zur Verfügung ebenso wie zum elektrischen Anfahren wahlweise der erste Gang oder der zweite Gang genutzt werden kann. Bei fester Kopplung der beiden Eingangswellen miteinander stehen die Gänge eins bis sechs und gegebenenfalls ein Rückwärtsgang für den verbrennungsmotorischen Betrieb zur Verfügung. Hierbei kann in den Gängen eins, drei und fünf die elektrische Maschine vom Antrieb abgekoppelt bleiben und in den Gängen zwei, vier, sechs die elektrische Maschine drehmomentfrei bleiben. Ebenso kann bei fester Kopplung der beiden Eingangswellen auch im elektromotorischen Betrieb durch die Gänge eins bis sechs geschaltet werden, während der Verbrennungsmotor mittels der Reibungskupplung abgetrennt ist. Bei entkoppelten Eingangswellen stehen für den rein elektromotorischen Antrieb die Gänge zwei, vier, sechs zur Verfügung. In sämtlichen Gängen ist durch Koppeln der beiden Eingangswellen (Gänge zwei, vier, sechs) bzw. durch Entkoppeln der beiden Eingangswellen (Gänge eins, drei, fünf) ein Boost-Betrieb, d.h. verbrennungsmotorischer Antrieb mit zusätzlichem elektrischem Antrieb möglich.

Durch eine sinnvolle Reihenfolge des Öffnens und Schließens der Reibungskupplung des Verbrennungsmotors und der Kupplungseinheit zwischen den beiden Eingangswellen sowie eine daran angepaßte Reihenfolge der Betätigung der Schalteinheiten der verschiedenen Gänge ist ein zugkraftfreies Schalten zwischen den Gängen möglich. Vor dem Schalten der Kupplungseinheit ist hierbei jeweils ein Synchronisieren der Drehzahlen der beiden Eingangswellen sinnvoll. Entscheidend für diese Art der Betätigung ist, daß bei der erfindungsgemäßen Getriebeanordnung das zu schaltende Element (Schaltkupplung, Schalteinheit) stets abgetrennt werden kann, während wenigstens ein Antrieb, entweder die elektrische Maschine oder der Verbrennungsmotor, mit dem Getriebeausgang, d.h. einem Abtriebsrad in drehmomentübertragender Verbindung steht. Beim Schalten können die Drehzahlen an den zu schaltenden Elementen durch entsprechende Steuerung der elektrischen Maschine und des Verbrennungsmotors angeglichen werden, so daß zumindest die genannte Kupplungseinheit zum Verbinden der beiden Eingangswellen als einfache Schaltkupplung (Synchroneinheit) ausgeführt werden kann. Die Reibungskupplung des Verbrennungsmotors läßt ein schleifendes Zuschalten des Verbrennungsmotors zu, wie es üblich ist.

Aufgrund der gewählten Anordnung der elektrischen Maschine und des Verbrennungsmotors, erfolgt bei Betrieb beider Maschinen eine Drehmomentaddition. Wie nachfolgend dargestellt, ist ein Anfahren mit dem E-Motor sowie ein Generatorbetrieb im Rekuperations-Modus möglich.

Das Antriebssystem ist darauf ausgelegt, daß bei Vollast- bzw. Dauerlastbetrieb mit dem Verbrennungsmotor alleine gefahren wird. Die gewünschten Funktionen eines Hybridantriebs sind jedoch mit geringem Aufwand uneingeschränkt dargestellt.

Nach einer ersten günstigen konstruktiven Ausgestaltung, die eine radial kompakte Bauweise ermöglicht, ist vorgesehen, daß die beiden Eingangswellen in koaxialer Anordnung liegen und über eine koaxial angeordnete Kupplungseinheit miteinander koppelbar sind. Hierbei ist insbesondere vorgesehen, daß die beiden Abtriebswellen einstückig miteinander verbunden sind.

Nach einer zweiten konstruktiven Ausgestaltung, die eine kurze Bauweise für den Quereinbau im Fahrzeug ermöglicht, ist vorgesehen, daß die beiden Abtriebswellen jeweils parallel zu ihrer Eingangswelle angeordnet sind und jeweils über Festräder mit einem einzelnen Abtriebsrad gekoppelt sind. Hierbei ist weiterhin vorgesehen, daß die beiden Abtriebswellen jeweils parallel zu ihrer Eingangswelle angeordnet sind und jeweils über Festräder mit einem einzelnen Abtriebsrad gekoppelt sind.

Weitere günstige Ausgestaltungen finden sich in den Unteransprüchen, auf die hier inhaltlich Bezug genommen wird.

Die verschiedenen Betriebszustände, die vorstehend nur angedeutet wurden, ergeben sich detailliert aus der nachfolgenden Zeichnungsbeschreibung.

Zwei bevorzugte Ausführungsbeispiele der Erfindung sind in den Zeichnungen dargestellt und werden nachstehend beschrieben. Hierin zeigen
- Figur 1: das Getriebeschema eines erfindungsgemäßen Hybridantriebssystems in einer ersten Ausführung in Neutralstellung;
- Figur 2: das Getriebeschema nach Figur 1 beim Anfahren und Fahren mit der elektrischen Maschine EM;
- Figur 3: das Getriebeschema nach Figur 1 beim Anlassen des Verbrennungsmotors CE durch die elektrische Maschine EM im Fahrzeugstillstand;
- Figur 4: das Getriebeschema nach Figur 1 beim Anlassen des Verbrennungsmotors CE durch die elektrische Maschine EM während des elektrischen Fahrens;
- Figur 5a: das Getriebeschema nach Figur 1 beim Hochschalten vom zweiten Gang in den dritten Gang in einer ersten Phase sowie den Boost-Modus;
- Figur 5b: das Getriebeschema nach Figur 1 beim Hochschalten vom zweiten Gang in den dritten Gang in einer zweiten Phase;
- Figur 5c: das Getriebeschema nach Figur 1 beim Hochschalten vom zweiten Gang in den dritten Gang in einer dritten Phase;
- Figur 5d: das Getriebeschema nach Figur 1 beim Hochschalten vom zweiten Gang in den dritten Gang in einer vierten Phase;
- Figur 6a: das Getriebeschema nach Figur 1 beim Herunterschalten vom dritten Gang in den zweiten Gang in einer ersten Phase;
- Figur 6b: das Getriebeschema nach Figur 1 beim Herunterschalten vom dritten Gang in den zweiten Gang in einer zweiten Phase;
- Figur 6c: das Getriebeschema nach Figur 1 beim Herunterschalten vom dritten Gang in den zweiten Gang in einer dritten Phase;
- Figur 6d: das Getriebeschema nach Figur 1 beim Herunterschalten vom dritten Gang in den zweiten Gang in einer vierten Phase sowie den Boost-Modus;
- Figur 7a: das Getriebeschema nach Figur 1 im Rekuperations-Modus (zweiter, vierter oder sechster Gang);
- Figur 7b: das Getriebeschema nach Figur 1 im Rekuperations-Modus (erster, dritter oder fünfter Gang);
- Figur 8: das Getriebeschema nach Figur 1 im Fahrzeugstillstand bei Kompressorantrieb;
- Figur 9: das Getriebeschema eines erfindungsgemäßen Hybridantriebssystems in einer zweiten Ausführung im Vierwellendesign in Neutralstellung;
- Figur 10: das Getriebeschema nach Figur 9 beim Anfahren und Fahren mit der elektrischen Maschine EM;
- Figur 11 1: das Getriebeschema nach Figur 9 beim Anlassen des Verbrennungsmotors CE durch die elektrische Maschine EM beim elektrischen Fahrantrieb;
- Figur 12: das Getriebeschema nach Figur 9 im Fahrzeugstillstand beim Anlassen des Verbrennungsmotors CE durch die elektrische Maschine EM im Fahrzeugstillstand;
- Figur 13a: das Getriebeschema nach Figur 9 beim Hochschalten vom vierten Gang in den fünften Gang in einer ersten Phase;
- Figur 13b: das Getriebeschema nach Figur 9 beim Hochschalten vom vierten Gang in den fünften Gang in einer zweiten Phase;
- Figur 13c: das Getriebeschema nach Figur 9 beim Hochschalten vom vierten in den fünften Gang in einer dritten Phase;
- Figur 14a: das Getriebeschema nach Figur 9 im Boost-Modus (Verbrennungsmotor CE im ersten, dritten oder fünften Gang);
- Figur 14b: das Getriebeschema nach Figur 9 im Boost-Modus (Verbrennungsmotor CE im zweiten, vierten oder sechsten Gang);
- Figur 15: das Getriebeschema nach Figur 9 im Rekuperations-Modus;
- Figur 16: das Getriebeschema nach Figur 9 im Fahrzeugstillstand bei Kompressorantrieb.

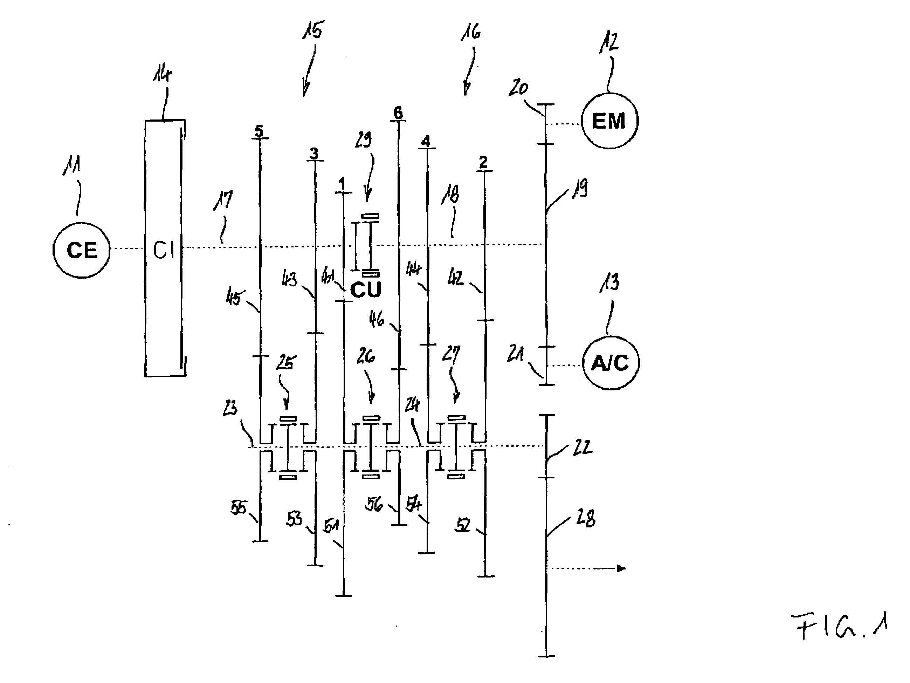

In Figur 1 ist ein erfindungsgemäßes Hybridantriebssystem in einer ersten Ausführung dargestellt. Die nachfolgende Beschreibung der Figur 1 gilt grundsätzlich für die Figuren 1 bis 8, die nur unterschiedliche Schaltzustände des Getriebeschemas darstellen.

Es ist ein Hybridantriebssystem dargestellt, das eine Hauptantriebsmaschine 11, hier in Form eines Verbrennungsmotors (Combustion Engine CE), eine Zusatzantriebsmaschine 12, hier in Form einer elektrischen Maschine (EM), und eine Nebenabtriebsmaschine 13, hier in Form eines Kompressors für eine Klimaanlage (Air Conditioning A/C), umfaßt. Der Verbrennungsmotor 11 ist über eine Reibungskupplung 14 (Clutch CI), die als Naß- oder Trockenkupplung ausgeführt sein kann, mit dem Getriebe koppelbar. Das Getriebe umfaßt zwei Gangschaltteilgetriebe 15, 16 (Stufenwechselgetriebe), die sich dadurch auszeichnen, daß sie jeweils eine eigene Eingangswelle 17 und 18 aufweisen. Die Eingangswelle 17 des ersten Teilgetriebes trägt die Zahnräder der Gänge 1, 3 und 5 und ist über die Reibungskupplung 14 mit dem Verbrennungsmotor 11 koppelbar. Die Eingangswelle 18 des zweiten Teilgetriebes 16 trägt die Zahnräder der Gänge 2, 4 und 6 sowie ein Eingangsrad 19, das über ein Zahnrad 20 mit der elektrischen Maschine 12 und über ein Zahnrad 21 mit dem Klimaanlagenkompressor 13 in untersetzter Antriebsverbindung ist. Die Abtriebswellen 23, 24 der beiden Teilgetriebe 15, 16 sind in dieser Ausführung fest miteinander verbunden, insbesondere als einteilige Welle ausgebildet. Die Schalträder der einzelnen Gänge sitzen auf der Abtriebswelle 23, 24, wobei eine gemeinsame Schalteinheit 25 für die Gänge 3 und 5, eine weitere gemeinsame Schalteinheit 26 für die Gänge 1 und 6 sowie eine Schalteinheit 27 für die Gänge 2 und 4 vorgesehen ist. Ein Rückwärtsgang ist in diesem Getriebeschema nicht ausgeführt. Rückwärtsfahrt ist durch Drehrichtungsumkehr der elektrischen Maschine 12 möglich. Daneben kann mit einem Umkehrrad auf einer Zwischenwelle und einer weiteren Schalteinheit auch ein Rückwärtsgang für den Fahrbetrieb mit dem Verbrennungsmotor 11 in üblicher Weise dargestellt werden. Die Abtriebswelle 23, 24 wirkt über ein Zahnrad 22 auf ein Abtriebsrad 28 des Getriebes ein, von dem Leistung abgenommen werden kann (output). Zwischen den Eingangswellen 17, 18 ist gemäß der Erfindung eine Kupplungseinheit 29 (Coupling Unit CU) angeordnet, die sich insbesondere unter Synchronisieren der Drehzahlen der beiden Eingangswellen für verschiedene Betriebszustände schalten läßt, die nachstehend anhand der weiteren Figuren erläutert werden.

Die Festräder der Gänge 1 bis 6, die drehfest auf den Eingangswellen 17, 18 angeordnet sind, sind nur in Figur 1 in der Reihenfolge der Gänge mit 41, 42, 43, 44, 45, 46 bezeichnet, die entsprechenden Schalträder der Gänge, die mit den Abtriebswellen 23, 24 koppelbare Losräder sind, in der Reihenfolge der Gänge mit 51, 52, 53, 54, 55. Festräder und Losräder könnten zwischen den Wellen auch vertauscht werden.

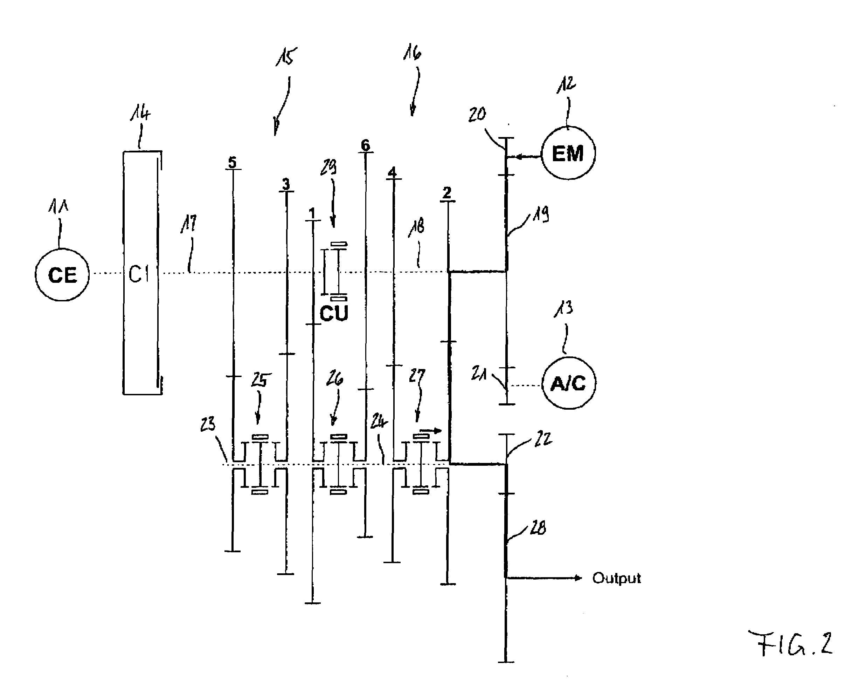

In Figur 2 ist die Kupplungseinheit 29 ausgerückt, so daß die Eingangswellen 17, 18 voneinander getrennt sind. Von den Getriebegängen ist ausschließlich der zweite Gang mittels der Schalteinheit 27 eingerückt. In diesem Schaltzustand ist das elektrische Anfahren, je nach Drehrichtung für Vorwärts- oder Rückwärtsfahrt, mit der elektrischen Maschine sowie das Fahren mit der elektrischen Maschine möglich. Denkbar ist ein Hochschalten in den vierten und sechsten Gang, wobei es zu einer Zugkraftunterbrechung kommen würde. Mit einer verstärkt gezeichneten Linie ist der Drehmomentfluß von der elektrischen Maschine 12 zum Abtriebsrad 28 versinnbildlicht.

Es gelten folgende Schaltzustände
Drehmoment von EM
Kupplung Cl offen,
Kupplungseinheit CU ausgerückt,
zweiter Gang eingerückt.

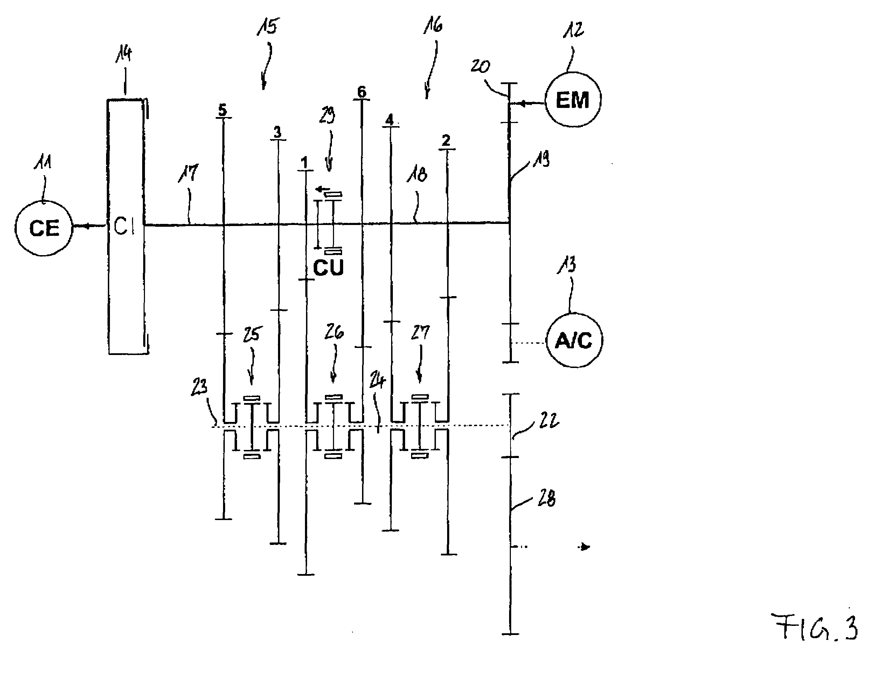

In Figur 3 ist die elektrische Maschine 12 in Anlasserfunktion dargestellt. Hierzu wird die Kupplungseinheit 29 eingerückt und ebenso die Reibungskupplung 14 geschlossen. Sämtliche Gänge sind mittels der Schalteinheiten 25, 26, 27 ausgerückt. Mit einer verstärkt gezeichneten Linie ist der Drehmomentfluß von der elektrischen Maschine 12 zum Verbrennungsmotor 11 versinnbildlicht.

Es gelten folgende Schaltzustände
Drehmoment von elektrischer Maschine EM,
Kupplungseinheit CU eingerückt.
Kupplung Cl geschlossen,
Anlassen von Verbrennungsmotor CE.

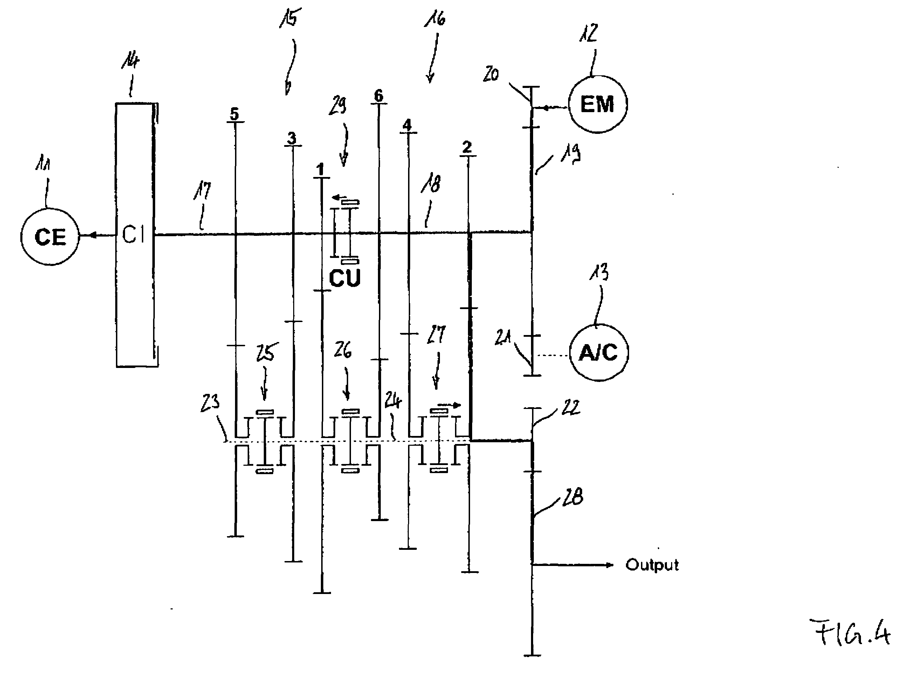

In Figur 4 ist das Anlassen des Verbrennungsmotors 11 durch die elektrische Maschine 12 während des elektrischen Fahrbetriebs dargestellt. Hierbei ist mittels der Schalteinheit 27 der zweite Gang eingelegt, so daß der Drehmomentfluß von der elektrischen Maschine 12 über das Zahnradpaar des zweiten Ganges zum Abtriebsrad 28 des Getriebes fließt, während gleichzeitig die Kupplungseinheit 29 eingerückt ist und die Reibungskupplung 14 geschlossen wird, um im Drehmomentfluß über die beiden Eingangswellen 18, 17 und die Reibungskupplung 14 den Verbrennungsmotor 11 anzulassen. Durch verdickte Linien ist der Drehmomentfluß von der elektrischen Maschine 12 zum Verbrennungsmotor 11 und zum Abtriebsrad 28 versinnbildlicht.

Es gelten folgende Schaltzustände
Drehmoment von elektrischer Maschine EM,
Schalteinheit CU eingerückt,
Kupplung CL schließen,
zweiter Gang eingerückt.

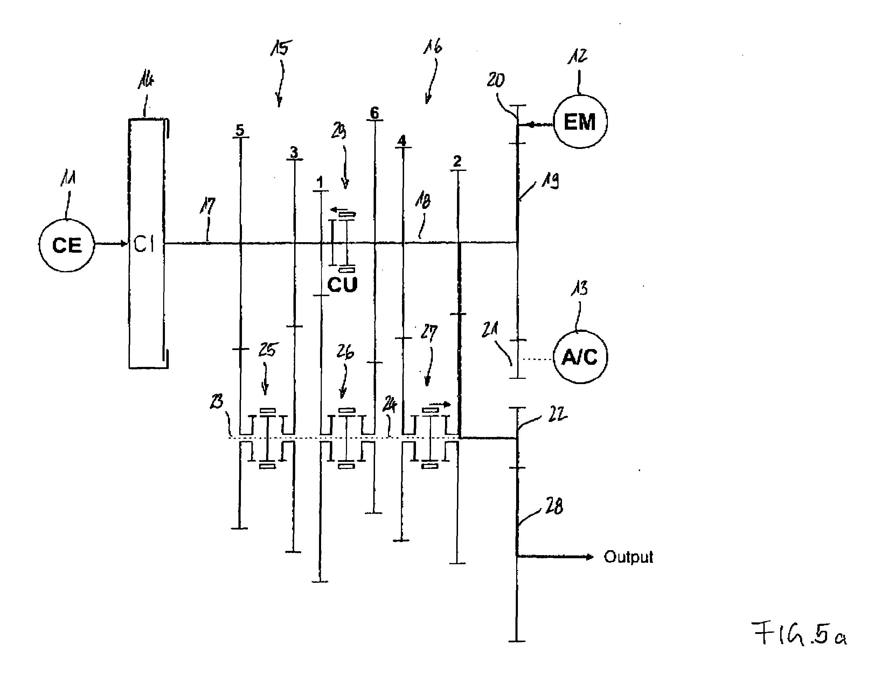

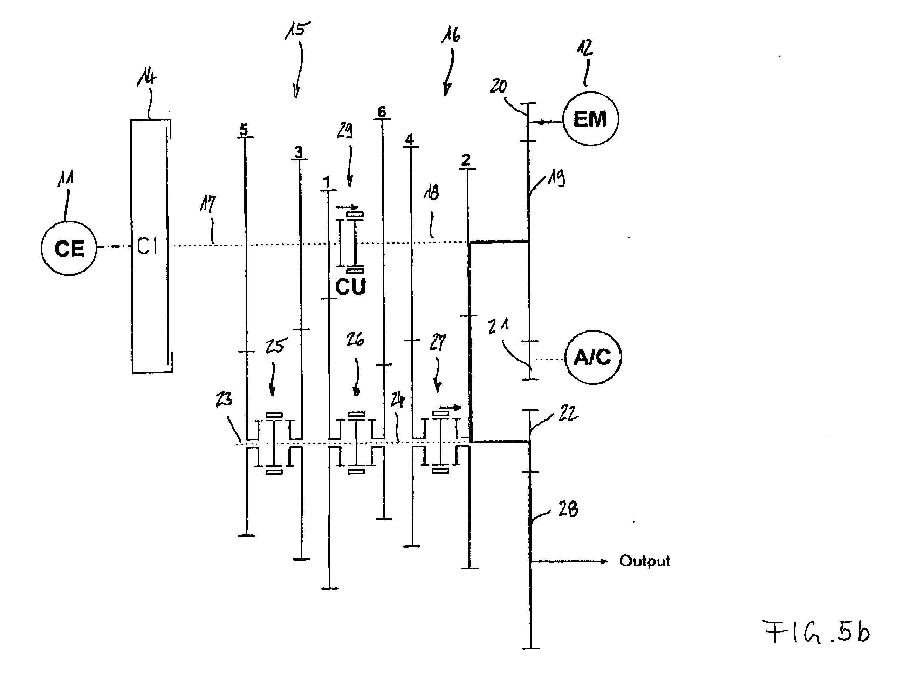

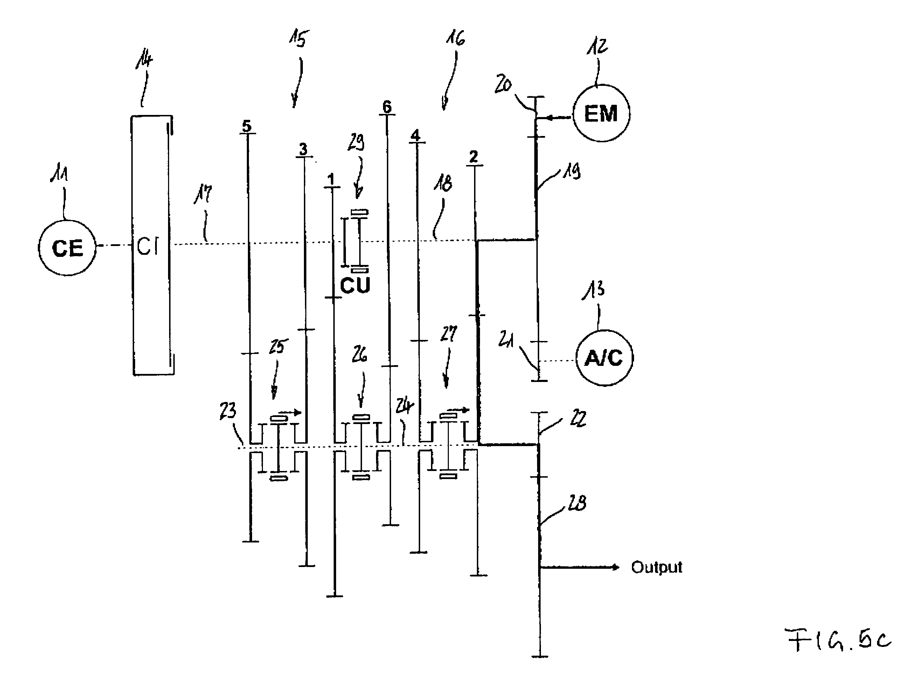

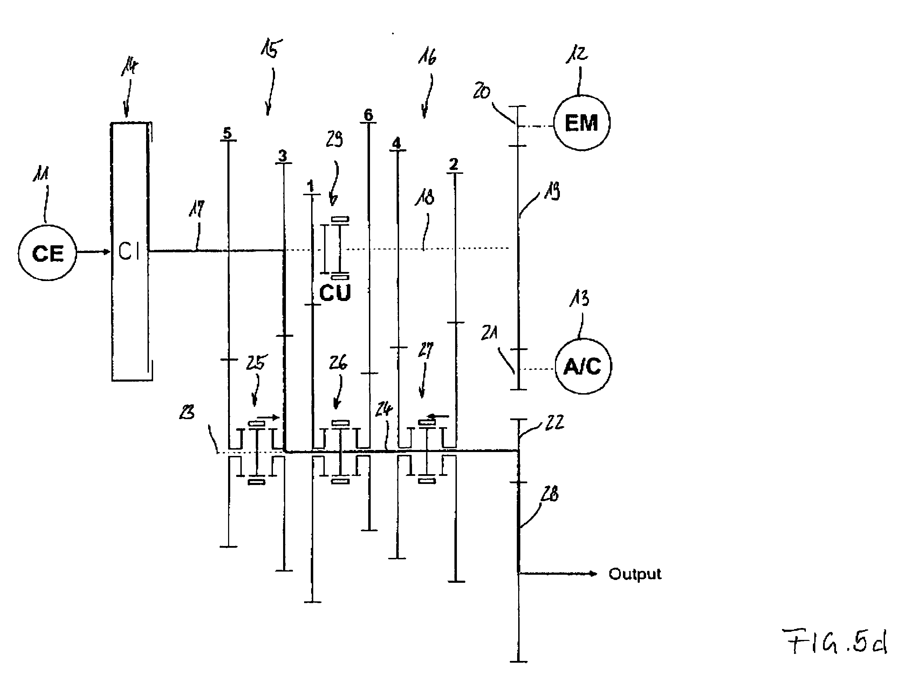

In den Darstellungen der Figur 5 sind verschiedene Phasen des Hochschaltens vom zweiten in den dritten Gang gezeigt.

In Figur 5a ist die Reibungskupplung 14 geschlossen und die Kupplungseinheit 29 eingerückt. Weiterhin ist mittels der Schalteinheit 27 der zweite Gang eingelegt. Drehmoment fließt vom Verbrennungsmotor 11 über die Eingangswellen 17, 18 und das Zahnradpaar des zweiten Ganges auf die Abtriebswelle 23, 24, so daß das Fahrzeug verbrennungsmotorisch angetrieben wird. Zusätzlicher Drehmomentfluß ist von der elektrischen Maschine über das Zahnradpaar 20, 19 auf die Eingangswelle 18 angedeutet. Dies ist der sogenannte Boost-Modus, in dem zusätzliches Drehmoment von der elektrischen Maschine aufgebracht wird. Diese könnte auch drehmomentfrei mitlaufen. Im vorliegenden Fall ist der Boost-Modus jedoch teil des folgenden Schaltvorgangs. Durch verdeckte Linien ist der Drehmomentfluß vom Verbrennungsmotor 11 und von der elektrischen Maschine 12 jeweils zum Abtriebsrad 28 versinnbildlicht.

Die Schaltzustände sind folgende
Drehmoment vom Verbrennungsmotor CE,
Kupplung Cl geschlossen,
Kupplungseinheit CU eingerückt,
zusätzliches Drehmoment von elektrischer Maschine EM,
zweiter Gang eingelegt.

In Figur 5b ist der zweite Gang noch eingelegt, jedoch wird die Reibungskupplung 14 geöffnet, um den Verbrennungsmotor 11 von der Eingangswelle 17 zu trennen und drehmomentfrei zu machen. Hiernach wird die Kupplungseinheit 29 ausgerückt, um die von der elektrischen Maschine 12 angetriebene Eingangswelle 18 von der Eingangswelle 17 zu trennen. Durch eine verdickte Linie ist der Drehmomentfluß von der elektrischen Maschine 12 zum Abtriebsrad 28 versinnbildlicht.

Die Schaltzustände sind wie folgt
Drehmoment von der elektrischen Maschine EM,
Kupplung CI offen,
Kupplungseinheit CU ausgerückt,
zweiter Gang eingelegt.
In Figur 5c ist dargestellt, daß der zweite Gang mittels der Schalteinheit 27 weiter eingelegt bleibt, zugleich jetzt aber mittels der Schalteinheit 25 der dritte Gang eingelegt wird. Hierbei ist die Eingangswelle 17 weiter drehmomentfrei, da die Reibungskupplung 14 weiterhin geöffnet ist. Der Drehmomentfluß erfolgt von der elektrischen Maschine 12 über die feste Kupplung der Wellen 18, 24 zum Abtriebsrad 28.

Die Schaltzustände sind folgende
Drehmoment von der elektrischen Maschine EM,
Kupplung Cl offen,
Kupplungseinheit CU ausgerückt,
zweiter Gang noch eingelegt,
dritter Gang bereits eingelegt.

In Figur 5d wird dargestellt, wie der Schaltvorgang abgeschlossen wird, indem mittels der Schalteinheit 27 der zweite Gang herausgenommen wird, während gleichzeitig durch Schließen der Reibungskupplung 14 die Zahnräder des bereits eingelegten dritten Ganges in den Drehmomentfluß vom Verbrennungsmotor 11 über die Eingangswelle 17 in den Drehmomentfluß zur Abtriebswelle und zum Abtriebsrad 28 einbezogen werden. Durch eine verdickte Linie ist der Drehmomentfluß vom Verbrennungsmotor 11 zum Abtriebsrad 28 versinnbildlicht.

Die Schaltzustände sind folgende
Drehmoment vom Verbrennungsmotor CE,
Kupplung Cl geschlossen,
Kupplungseinheit CU ausgerückt,
zweiter Gang herausgenommen,
dritter Gang eingelegt.

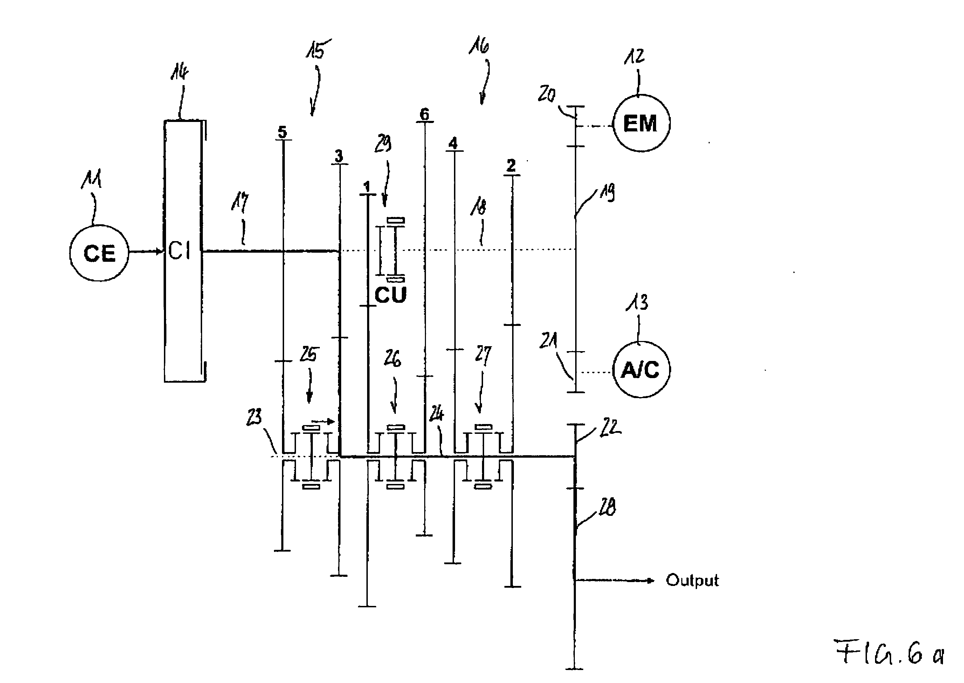

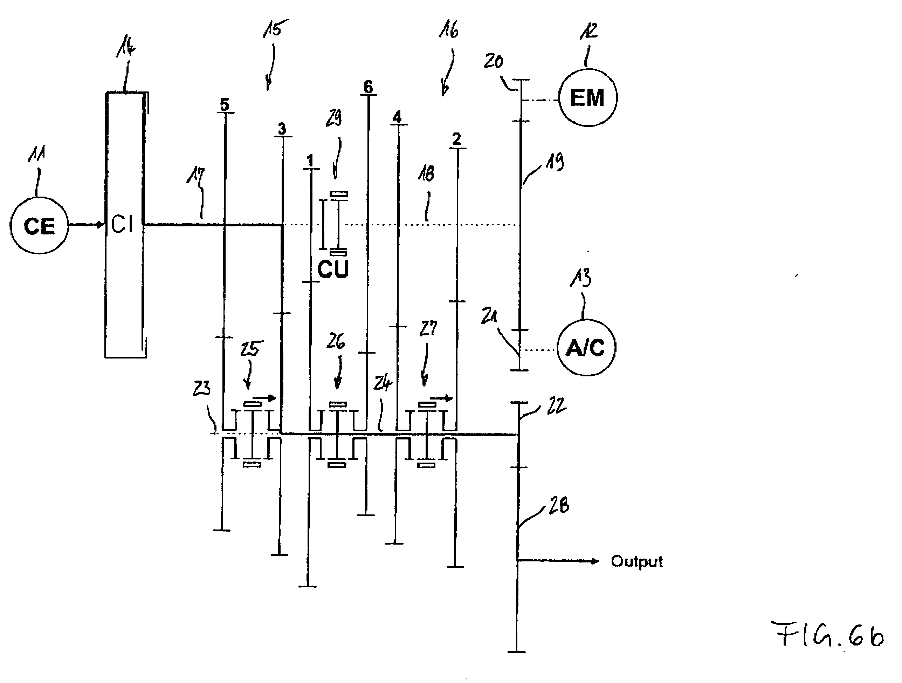

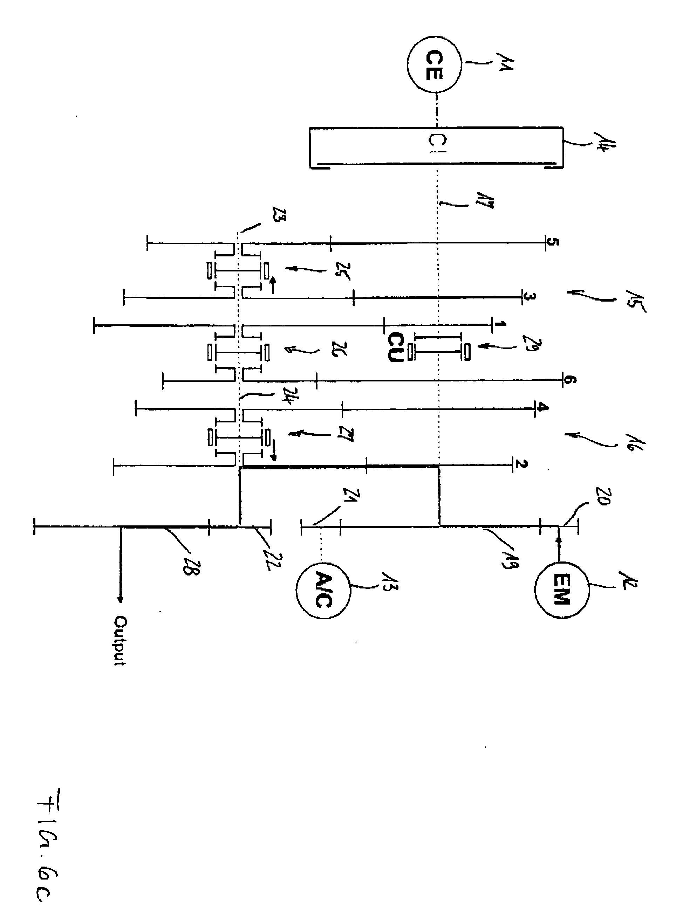

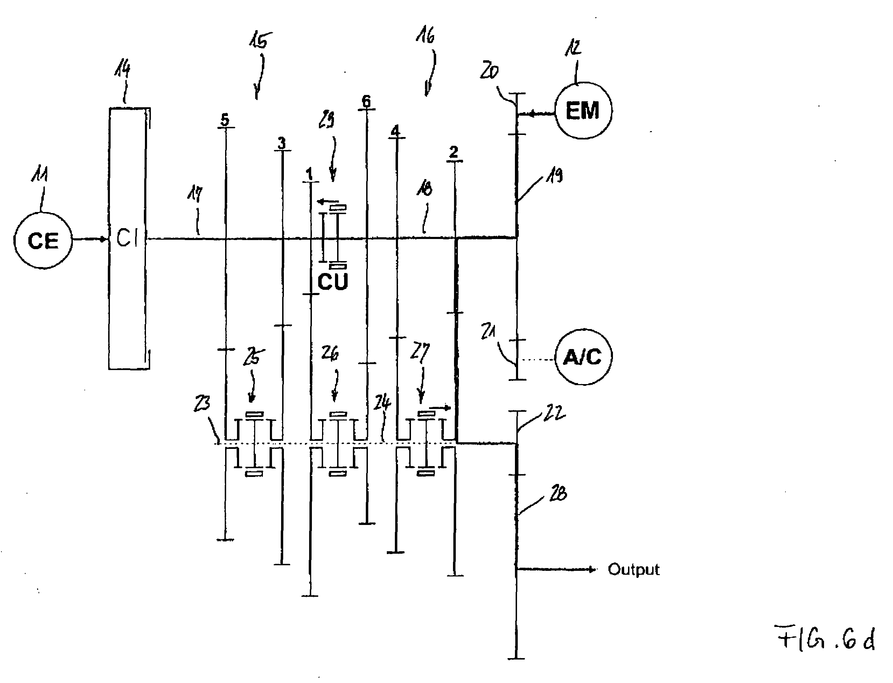

In den einzelnen Darstellungen der Figur 6 werden verschiedene Phasen des Herunterschaltens vom dritten in den zweiten Gang dargestellt.

In Figur 6a ist die Reibungskupplung 14 geschlossen und die Kupplungseinheit 29 ausgerückt, so daß die Eingangswellen 17, 18 voneinander getrennt sind. Durch die Schalteinheit 25 ist das Schaltrad des dritten Ganges mit der Abtriebswelle 23 gekoppelt, d.h. der dritte Gang ist eingelegt. Drehmoment fließt vom Verbrennungsmotor 11 über die Eingangswelle 17, das Zahnradpaar des dritten Ganges auf die Abtriebswellen 23, 24 und das Abtriebsrad 28. Durch eine verdickte Linie ist der Drehmomentfluß vom Verbrennungsmotor 11 zum Abtriebsrad 28 versinnbildlicht.

Die Schaltzustände sind folgende
Drehmoment vom Verbrennungsmotor CE,
Reibungskupplung Cl geschlossen,
Kupplungseinheit CU ausgerückt,
dritter Gang eingelegt.

In Figur 6b ist dargestellt, daß zur Vorbereitung des Gangwechsels der zweite Gang mittels der Schalteinheit 27 eingelegt wird, wobei noch kein Drehmoment über das Zahnradpaar des zweiten Ganges fließt, da die Kupplungseinheit 29 weiterhin offen ist und somit die Eingangswelle 18 von der Eingangswelle 17 entkoppelt ist. Die elektrische Maschine 12 ist hierbei nicht bestromt, Durch eine verdickte Linie ist der Drehmomentfluß vom Verbrennungsmotor 11 zum Abtriebsrad 28 versinnbildlicht.

Die Schaltzustände sind folgende
Drehmoment vom Verbrennungsmotor CE,
Reibungskupplung Cl geschlossen,
Kupplungseinheit CU ausgerückt,
dritter Gang eingelegt,
zweiter Gang eingelegt.

In Figur 6c ist die Reibungskupplung 14 nunmehr geöffnet, so daß die Eingangswelle 17 vom Drehmomentfluß getrennt ist. Die zuvor schon drehzahlsynchronisierte elektrische Maschine 12 übernimmt nunmehr das Drehmoment zum Antrieb im zweiten Gang. Das Schaltrad des dritten Ganges, das drehmomentfrei ist, wird mittels der Schalteinheit 25 von der Abtriebswelle 23 getrennt. Durch eine verdickte Linie ist der Drehmomentfluß von der elektrischen Maschine 12 zum Abtriebsrad 28 versinnbildlicht.

Die Schaltzustände sind folgende
Reibungskupplung CI offen,
Kupplungseinheit CU ausgerückt,
dritter Gang ausgerückt,
zweiter Gang eingelegt.

In Figur 6d ist die abschließende Phase des Gangwechsels vom dritten in den zweiten Gang gezeigt, wobei zunächst die Kupplungseinheit 29 eingerückt wird, so daß die Eingangswellen 17, 18 gekoppelt werden. Danach wird die Reibungskupplung 14 geschlossen, so daß zusätzlich Drehmoment vom Verbrennungsmotor 11 über die Eingangswellen 17, 18 und das Zahnradpaar des zweiten Gangs zum Abtriebsrad 28 fließen kann. Die elektrische Maschine 12 kann danach aus dem Drehmomentfluß herausgenommen werden. Durch verdickte Linien ist der Drehmomentfluß vom Verbrennungsmotor 11 ebenso wie von der elektrischen Maschine 12 zum Abtriebsrad 28 versinnbildlicht.

Die Schaltzustände sind folgende
Drehmoment vom Verbrennungsmotor CE,
Drehmoment von der elektrischen Maschine EM (optional),
Kupplung Cl geschlossen,
Schalteinheit CU geschlossen,
zweiter Gang eingelegt.

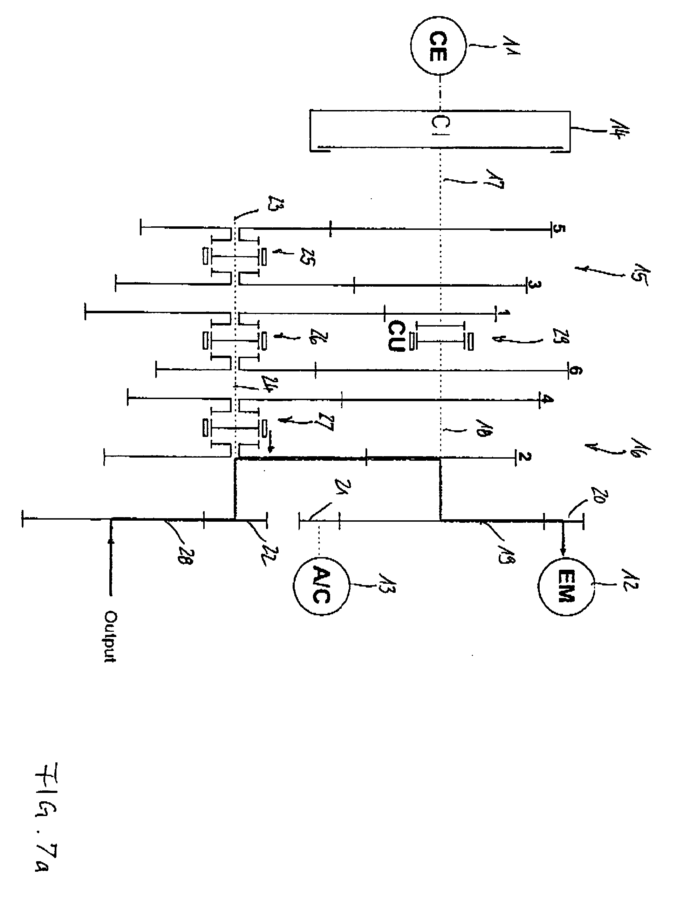

In Figur 7a ist ein Schaltzustand für die Energierekuperation im Schiebebetrieb des Fahrzeugs gezeigt. Die Schaltkupplung 14 ist offen, ebenso ist die Kupplungseinheit 29 ausgerückt. Über den eingelegten zweiten Gang fließt Drehmoment vom Abtriebsrad 28 über die Abtriebswelle 24 auf die Eingangswelle 18, so daß die elektrische Maschine 12 im Generatorbetrieb läuft. Durch eine verdickte Linie ist der Drehmomentfluß vom Abtriebsrad 28 zur elektrischen Maschine 12 versinnbildlicht.

Die Schaltzustände sind folgende
Drehmoment zur elektrischen Maschine EM,
Kupplung CI offen,
Kupplungseinheit CU ausgerückt,
zweiter Gang eingelegt.

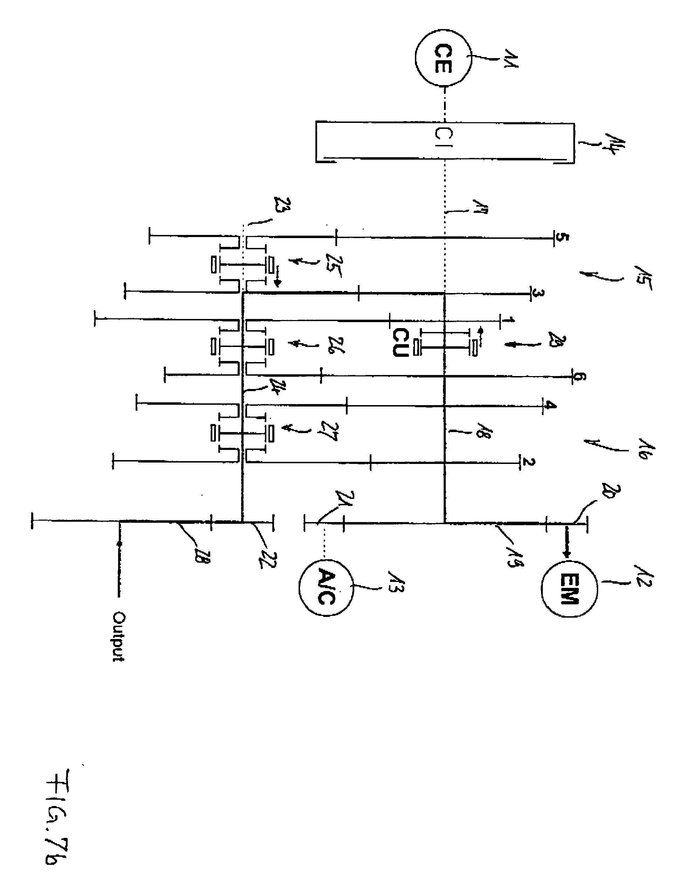

In Figur 7b ist der Schaltzustand im Rekuperations-Modus, d.h. im Fahrzeugschiebebetrieb bei Verwendung des dritten Ganges gezeigt. Hierbei ist das Schaltrad des dritten Ganges durch die Schalteinheit 25 mit der Abtriebswelle 23 gekoppelt, so daß Drehmoment vom Abtriebsrad 28 über die Abtriebswelle 24, 23 fließt. Die Kupplungseinheit 29 muß hierbei, ebenso wie bei Verwendung der Gänge eins und fünf eingerückt sein, damit das Drehmoment von der Eingangswelle 17 zur Eingangswelle 18 und von dort auf die elektrische Maschine 12 übertragen wird, die im Generatorbetrieb läuft. Durch eine verdickte Linie ist der Drehmomentfluß vom Abtriebsrad 28 zur elektrischen Maschine 12 versinnbildlicht.

Die Schaltzustände sind folgende
Drehmoment zur elektrischen Maschine EM,
Kupplung CI offen,
Kupplungseinheit CU eingerückt,
dritter Gang eingelegt.

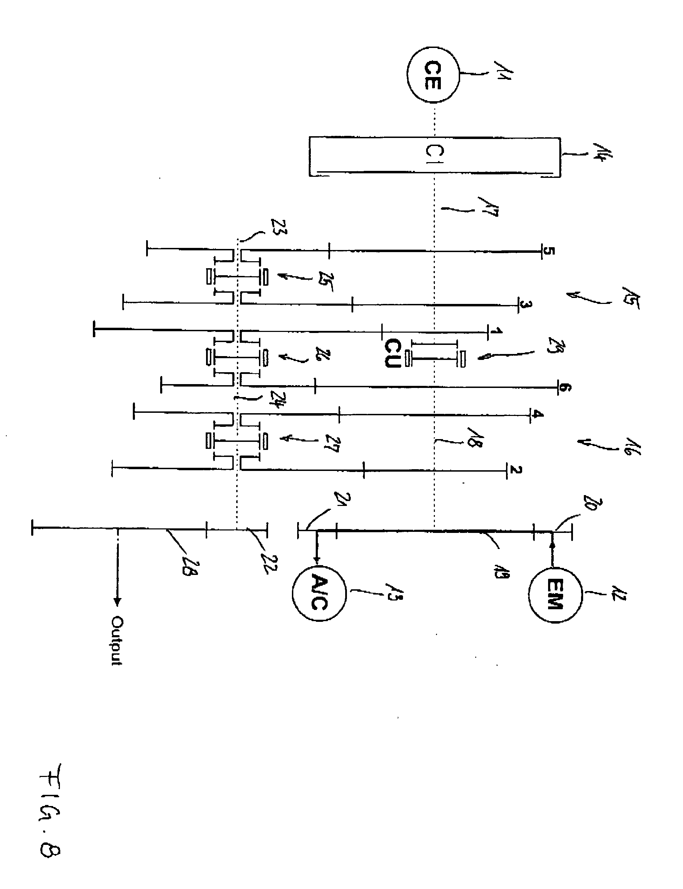

In Figur 8 ist der Betrieb einer Nebenabtriebsmaschine, nämlich des Klimaanlagenkompressors 13 durch die elektrische Maschine 12 im Fahrzeugstillstand gezeigt. Sowohl die Kupplung 14 ist offen, als auch die Kupplungseinheit 29 ausgerückt. Alle Schalteinheiten 25, 26, 27 sind in Neutralstellung. Durch eine verdickte Linie ist der Drehmomentfluß von der elektrischen Maschine 12 zum Klimaanlagenkompressor 13 versinnbildlicht.

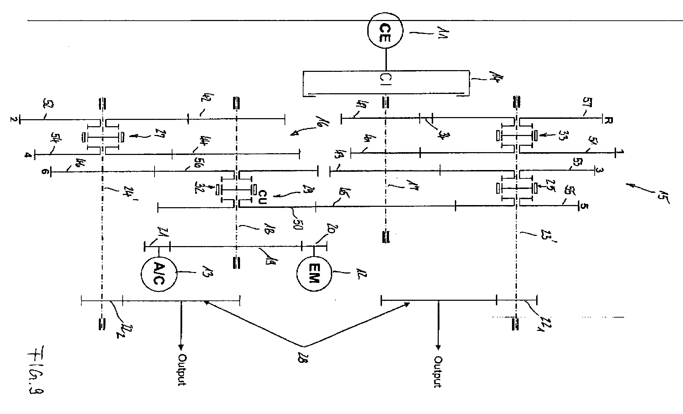

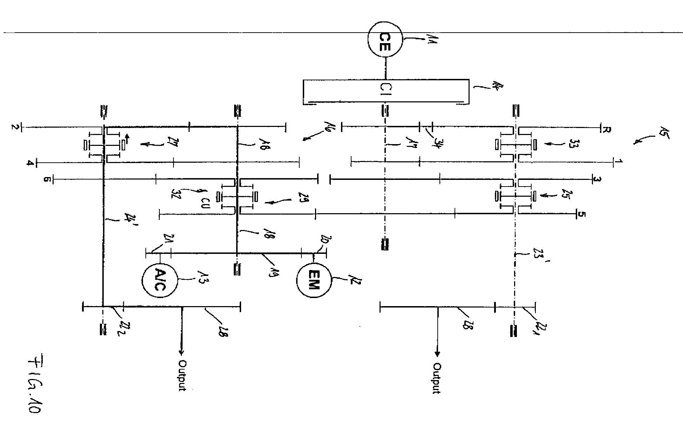

In Figur 9 ist ein erfindungsgemäßes Hybridantriebssystem in einer zweiten Ausführung dargestellt. Die Beschreibung der Figur 9 gilt grundsätzlich auch für die Figuren 10 bis 16, die verschiedene Schaltzustände des gleichen Getriebeschemas zeigen, das in Figur 9 in Neutralstellung gezeigt ist. Übereinstimmende Bauteile und Baugruppen sind mit den gleichen Bezugsziffern bezeichnet, wie in den Figuren 1 bis 8. Auch hier ist ein Hybridantriebssystem mit einer Hauptantriebsmaschine 11 in Form eines Verbrennungsmotors (Combustion Engine CE) mit einer Zusatzantriebsmaschine 12 in Form einer elektrischen Maschine (EM) und einer Nebenabtriebsmaschine 13 in Form eines Klimaanlagenkompressors (A/C) dargestellt, das zwei Gangschaltleilgetfiebe 15,16 umfaßt. Die Eingangswelle 17 des ersten Teilgetriebes 15 ist über eine Reibungskupplung 14 mit dem Verbrennungsmotor 11 koppelbar. Das Teilgetriebe 15 umfaßt weiterhin eine Abtriebswelle 23', das die Schalträder der Gänge 1, 3 und 5 sowie des Rückwärtsganges R trägt. Über ein Zahnrad 22₁ treibt die zugeordnete Abtriebswelle 23' ein Abtriebsrad 28 an. Das zweite Teilgetriebe 16 hat eine Eingangswelle 18, die über ein Antriebsrad 19 und ein Zahnrad 20 mit der elektrischen Maschine 12 in Antriebsverbindung ist. Über ein weiteres Zahnrad 21 ist die Eingangswelle 18 ebenfalls mit dem Klimaanlagenkompressor 13 in Antriebsverbindung. Die Eingangswelle 18 ist mit der Eingangswelle 17 über eine Kupplungseinheit 29 über ein Zahnradpaar 45, 50 verbindbar, wobei das Zahnrad 45 fest auf der Eingangswelle 17 sitzt, während das auf der Eingangswelle 18 angeordnete Zahnrad 50 ein Schaltrad ist, das von der Kupplungseinheit 29 geschaltet wird. Die Kupplungseinheit ist Teil einer Schalteinheit 32, die gleichzeitig den sechsten Gang schaltet. Eine weitere Schalteinheit 27 für den zweiten und vierten Gang sitzt auf der zugeordneten Abtriebswelle 24' des Teilgetriebes 16. Die Abtriebswelle 24' wirkt über ein Zahnrad 22₂ ebenfalls auf das Abtriebsrad 28, das hier aus zeichnerischen Gründen zweimal dargestellt ist, da tatsächlich die Wellen 17, 18, 23', 24' nicht in einer Ebene liegen. In dieser Ausführung weist das Teilgetriebe 15 auch einen Rückwärtsgang auf, der über eine Schalteinheit 33 gemeinsam mit dem ersten Gang geschaltet wird. Der Zahnradsatz des Rückwärtsganges R umfaßt ein Umkehrrad 34.

Die Festräder der Gänge 1 bis 5 und des Rückwärtsganges R, die drehfest auf den Eingangswellen 17, 18 angeordnet sind, sind nur in Figur 9 in der genannten Reihenfolge der Gänge mit 41, 42, 43, 44, 45, 47 bezeichnet, die entsprechenden Schalträder der Gänge, die mit den Abtriebswellen 23', 24' koppelbare Losräder sind, in der genannten Reihenfolge der Gänge mit 51, 52, 53, 54, 55, 57. In Umkehrung dazu ist das Festrad 46 des sechsten Ganges drehfest auf der Abtriebswelle 24' angeordnet, während das entsprechende Schaltrad 56 auf der zweiten Eingangswelle 18 als koppelbares Losrad ausgeführt ist.

In Figur 10 ist der Fahrzustand bei elektrischem Antrieb gezeigt. Hierbei ist sowohl die Kupplung 14 des Verbrennungsmotor 11 geöffnet, als auch die Kupplungseinheit 29 ausgerückt. Dagegen ist mittels der Schalteinheit 27 der zweite Gang eingelegt. Es erfolgt der durch verstärkte Linien dargestellte Drehmomentfluß von der elektrischen Maschine 12 über die Eingangswelle 18 auf die Abtriebswelle 24' und von dort auf das Abtriebsrad 28.

Die Schaltzustände sind folgende
Drehmoment von elektrischer Maschine EM,
Kupplung Cl geöffnet,
Kupplungseinheit CU ausgerückt,
zweiter Gang eingelegt.

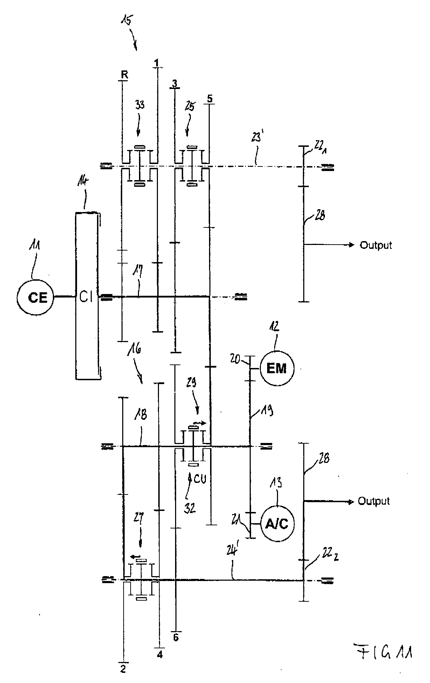

In Figur 11 ist das Anlassen des Verbrennungsmotors 11 bei Fahrt mit der elektrischen Maschine 12 dargestellt. Der zweite Gang ist mittels der Schalteinheit 27 weiter eingelegt. Es wird darüberhinaus die Kupplungseinheit 29 eingerückt und zum Starten die Reibungskupplung 14 geschlossen. Der durch verdickte Linien symbolisierte Drehmomentfluß erfolgt von der elektrischen Maschine 12 zum Verbrennungsmotor 11 und zum Abtriebsrad 28.

Die Schaltzustände sind folgende
Drehmoment von der elektrischen Maschine EM,
Kupplungseinheit CU eingerückt,
Kupplung 14 geschlossen,
zweiter Gang eingelegt.

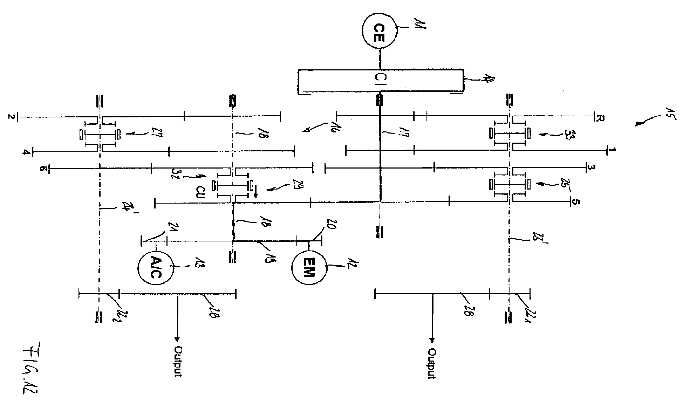

In Figur 12 ist das Anlassen des Verbrennungsmotors 11 mittels der elektrischen Maschine 12 im Fahrzeugstillstand gezeigt. Die Kupplungseinheit29 ist zum Koppeln der Eingangswellen 18 und 17 eingerückt. Die Reibungskupplung 14 wird geschlossen. Sämtliche Gänge sind ausgerückt. Der durch verstärkte Linien dargestellte Drehmomentfluß erfolgt von der elektrischen Maschine 12 über die Eingangswellen 18, 17 zum Verbrennungsmotor 11.

Die Schaltzustände sind folgende
Drehmoment von der elektrischen Maschine EM,
Kupplungseinheit CU eingerückt,
Reibungskupplung 14 geschlossen.

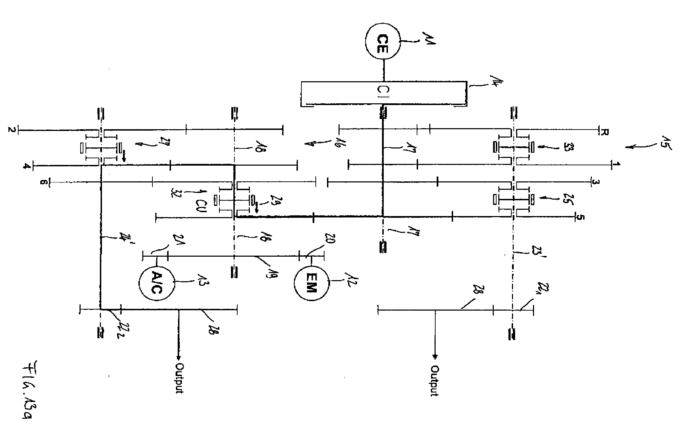

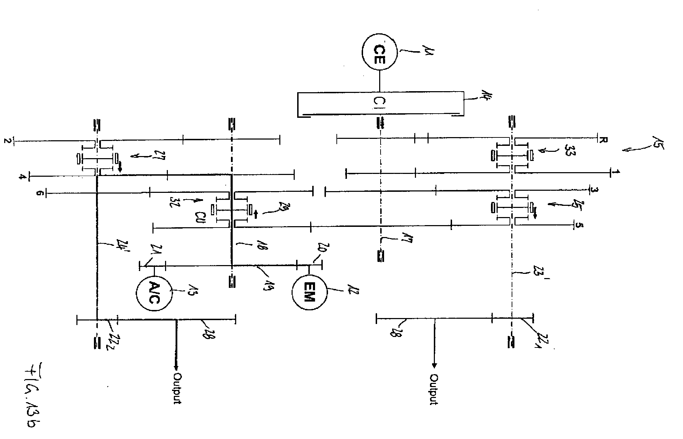

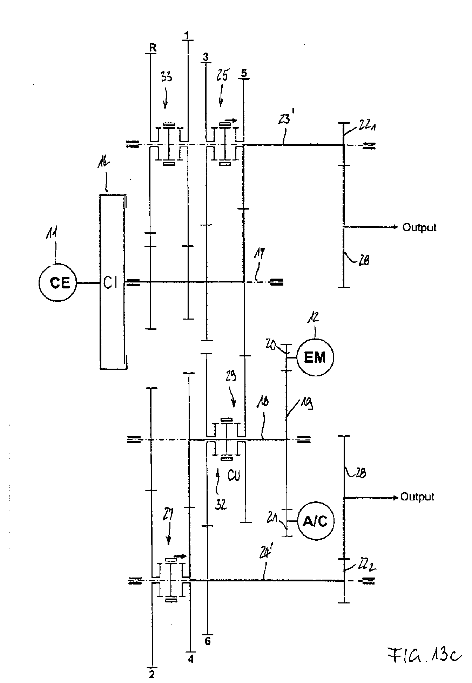

In den Darstellungen der Figur 13 sind verschiedene Phasen des Schaltvorgangs vom vierten in den fünften Gang dargestellt.

In Figur 13a ist die Reibungskupplung 14 geschlossen, ebenso die Kupplungseinheit 29 eingerückt. Drehmoment fließt somit von der Eingangswelle 17 auf die Eingangswelle 18; die Schalteinheiten 33, 25 auf der Abtriebswelle 23' befinden sich in Neutralstellung, während mittels der Schalteinheit 27 der vierte Gang eingelegt ist. Drehmoment fließt vom Verbrennungsmotor 11 über die Eingangswellen 17, 18 und über die Abtriebswelle 24' zum Abtriebsrad 28, wie durch verdickte Linien angezeigt.

Die Schaltzustände sind folgende
Drehmoment vom Verbrennungsmotor CE,
Kupplung CL geschlossen,
Kupplungseinheit CU eingerückt,
vierter Gang eingelegt.

In Figur 13b ist dargestellt, daß durch Ausrücken der Kupplungseinheit 29 die Eingangswelle 17 von der Eingangswelle 18 entkoppelt wird. Gleichzeitig übernimmt die elektrische Maschine 12 die Abgabe des Drehmoments über die Zahnräder des vierten Ganges zur Abtriebswelle 24'. Der Verbrennungsmotor 11 wird durch Öffnen der Reibungskupplung 14 ebenfalls von der Eingangswelle 17 entkoppelt. Mittels der Schalteinheit 25 wird der fünfte Gang eingelegt. Wie durch verdickte Linien dargestellt, erfolgt der Drehmomentfluß von der elektrischen Maschine 12 über die Wellen 18, 24' zum Abtriebsrad 28.

Die Schaltzustände sind folgende
Drehmoment von der elektrischen Maschine EM,
Kupplungseinheit CU ausgerückt,
vierter Gang eingelegt.

In Figur 13c wird die Reibungskupplung 14 wieder geschlossen, so daß der Verbrennungsmotor 11 über die Eingangswelle 17 des ersten Teilgetriebes 15 und die Zahnräder des fünften Ganges und die Abtriebswelle 23' Drehmoment an das Abtriebsrad 28 abgibt. Gleichzeitig kann die elektrische Maschine 12 weiterhin Drehmoment über den vierten Gang und die Abtriebswelle 24' an das Abtriebsrad 28 abgeben. Dies entspricht dem sogenannten Boost-Modus. Die Leistungsabgabe der elektrischen Maschine 12 kann jedoch auch eingestellt werden. Der Drehmomentfluß erfolgt vom Verbrennungsmotor 11 über die Wellen 17, 23' zum Abtriebsrad 28 und von der elektrischen Maschine 12 über die Wellen 18, 24' zum Abtriebsrad 28, wie durch verdickte Linien gezeigt.

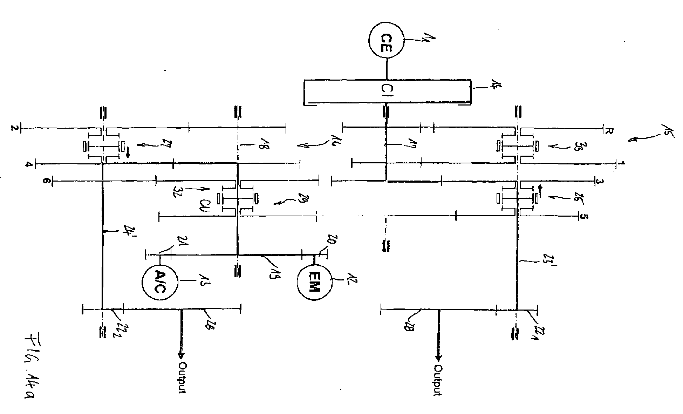

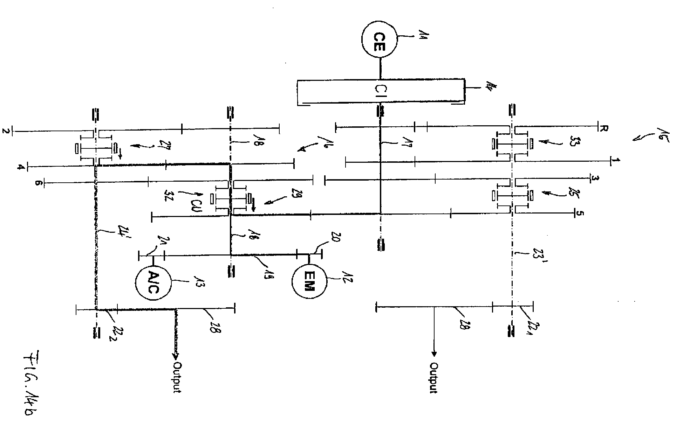

In den Darstellungen der Figur 14 ist jeweils ein Fahrbetrieb im Boost-Modus gezeigt, d.h. beide Antriebsmaschinen 11, 12 geben Drehmoment ab.

In Figur 14a ist der Verbrennungsmotor 11 bei geschlossener Kupplung 14 über die Zahnräder des dritten Ganges, der mittels der Schalteinheit 25 eingelegt ist, mit dem Abtriebsrad 28 gekoppelt. Gleichzeitig ist die elektrische Maschine 12, bei mit Hilfe der Schalteinheit 27 eingelegtem vierten Gang, über die Abtriebswelle 24' mit dem Abtriebsrad 28 gekoppelt. Die Kupplungseinheit 29 ist hierbei notwendigerweise ausgerückt. Der hier gezeigt Boost-Zustand kann in gleicher Weise für die Gänge eins und fünf eingestellt sein. Der Drehmomentfluß erfolgt vom Verbrennungsmotor 11 Ober die Wellen 17, 23' zum Abtriebsrad 28 und von der elektrischen Maschine 12 über die Wellen 18, 24' zum Abtriebsrad 28.

Die Schaltzustände sind folgende
Drehmoment vom Verbrennungsmotor CE,
Kupplung Cl geschlossen,
Drehmoment von der elektrischen Maschine EM,
Kupplungseinheit CU ausgerückt.
dritter Gang eingelegt.

In Figur 14b ist die Reibungskupplung 14 des Verbrennungsmotors 11 geschlossen, jedoch sind die Schalteinheiten 33, 25 des ersten Teilgetriebes 15 in Neutralstellung. Es ist jedoch die Kupplungseinheit 29 eingerückt und mittels der Schalteinheit 27 der vierte Gang eingelegt, so daß Drehmoment sowohl von der elektrischen Maschine 12, als auch vom Verbrennungsmotor 11 in die Eingangswelle 18 eingeleitet und auf die Abtriebswelle 24' übertragen wird. Der hier gezeigte Schaltzustand kann auch für die Gänge 2 und 6 verwendet werden. Der Drehmomentfluß erfolgt vom Verbrennungsmotor 11 über die Wellen 17, 18, 24' zum Abtriebsrad 28.

Die Schaltzustände sind folgende
Drehmoment vom Verbrennungsmotor CE,
Kupplung Cl geschlossen,
Drehmoment von der elektrischen Maschine EM,
Kupplungseinheit CU eingerückt,
vierter Gang eingelegt.

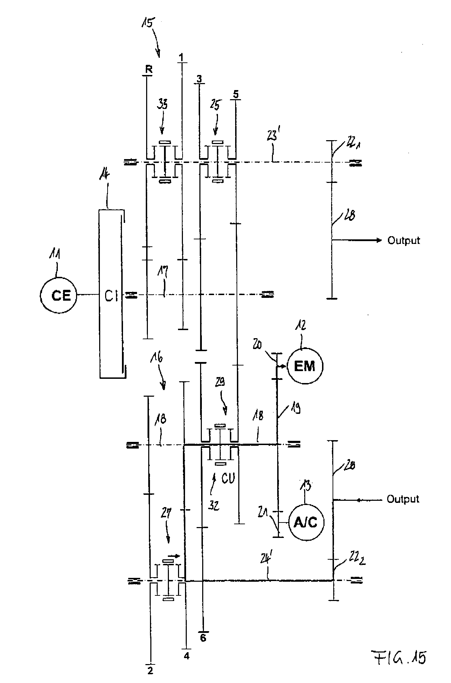

In Figur 15 ist der Rekuperations-Modus, also die Energierückgewinnung bei Fahrzeugschiebebetrieb gezeigt. Hierbei ist die Schaltkupplung 14 des Verbrennungsmotors 11 offen oder geschlossen; in jedem Fall jedoch die Schalteinheiten 33, 25 des ersten Teilgetriebes in Neutralstellung und die Kupplungseinheit 29 ausgerückt. Im zweiten Teilgetriebe ist der vierte Gang mittels der Schalteinheit 27 eingelegt. Drehmoment fließt vom Abtriebsrad 28 über die Abtriebswelle 24' und die Zahnradpaarung des vierten Ganges zur Eingangswelle 18 und damit zur elektrischen Maschine, die im Generatorbetrieb angetrieben wird. In gleicher Weise kann in dieser Art der zweite und sechste Gang genutzt werden.

Die Schaltzustände sind folgende
Kupplung Cl geöffnet,
Kupplungseinheit CU ausgerückt,
vierter Gang eingelegt.

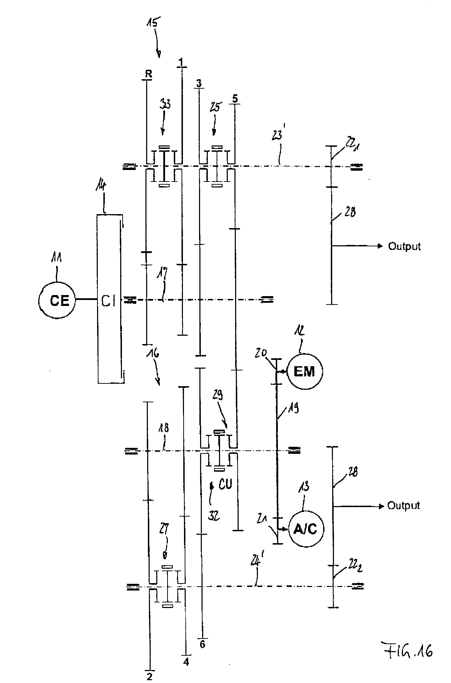

In Figur 16 ist der Antrieb des Klimaanlagenkompressors 13 durch die elektrische Maschine 12 im Fahrzeugstillstand gezeigt. Alle Schalteinheiten und die Kupplungseinheit 29 sind in Neutralstellung. Die Schaltkupplung 14 kann offen oder geschlossen sein. Drehmoment fließt von der elektrischen Maschine 12 zum Klimaanlagenkompressor 13, wie durch eine verdickte Linie dargestellt.

Die Schaltzustände sind folgende
Kupplung Cl offen,
Kupplungseinheit CU ausgerückt,
alle Schalteinheiten in Neutralstellung.

### Bezugszeichenliste

- 11: Hauptantriebsmaschine (Verbrennungsmotor)
- 12: Zusatzantriebsmaschine (elektrische Maschine)
- 13: Nebenabtriebsmaschine (Klimaanlagenkompressor)
- 14: Reibungskupplung
- 15: Gangschaltteilgetriebe
- 16: Gangschaltteilgetniebe
- 17: Eingangswelle
- 18: Eingangswelle
- 19: Zahnrad
- 20: Zahnrad
- 21: Zahnrad
- 22: Zahnrad
- 23: Abtriebswelle (15)
- 24: Abtriebswelle (16)
- 25: Schalteinheit
- 26: Schalteinheit
- 27: Schalteinheit
- 28: Abtriebsrad
- 29: Kupplungseinheit

- 32: Schalteinheit
- 33: Schalteinheit
- 34: Umkehrrad

- 41: Zahnrad (Festrad)

- 47:

- 50: Schaltrad (Losrad)
- 51: Schaltrad (Losrad)

- 57:

## Patentansprüche

1. Verfahren zum Betrieb eines Hybridantriebssystems mit einer Hauptantriebsmaschine (11) - insbesondere einem Verbrennungsmotor - und einer Zusatzantriebsmaschine (12) - insbesondere einer elektrischen Maschine - für ein Kraftfahrzeug, umfassend
ein erstes Gangschaltteilgetriebe (15) mit einer Eingangswelle (17) und einer Abtriebswelle (23) und einer ersten Gruppe von Gangschaftzahnradpaaren mit jeweils einem mit seiner Welle drehfest verbundenen Zahnrad und einem schaltbar mit seiner Welle koppelbaren Schaltrad, dessen Eingangswelle (17) mit der Hauptantriebsmaschine (11) koppelbar ist,
ein zweites Gangschaltteilgetriebe (16) mit einer Eingangswelle (18) und einer Abtriebswelle (24) und einer zweiten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle (18) mit der Zusatzantriebsmaschine (12) antriebsverbunden ist,
wobei die beiden Eingangswellen (17, 18) über eine Kupplungseinheit (29) drehfest miteinander verbindbar sind,
**dadurch gekennzeichnet,**
**daß** im Betrieb ausschließlich mit der Hauptantriebsmaschine (11) ein Gangwechsel zwischen zwei in der Gangfolge benachbarten Gängen jeweils mit einem Wechsel des Drehmomentflusses von einem Gangschaltteilgetriebe zum
anderen Gangschaftteilgetriebe dargestellt wird.

2. Verfahren nach Anspruch 1,
**dadurch gekennzeichnet,**
**daß** im Betrieb ausschließlich mit der Zusatzantriebsmaschine (12) ein Gangwechsel zwischen zwei in der Gangfolge benachbarten Gängen jeweils durch einen Wechsel des Drehmomentflusses von einem Gangschaftteilgetriebe zum anderen Gangschaltteilgetriebe verwirklicht wird.

3. Hybridantriebssystem mit einer Hauptantriebsmaschine (11) - insbesondere einem Verbrennungsmotor - und einer Zusatzantriebsmaschine (12) - insbesondere einer elektrischen Maschine - für ein Kraftfahrzeug, umfassend
ein erstes Gangschaftteilgetriebe (15) mit einer Eingangswelle (17) und einer Abtriebswelle (23) und einer ersten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle (17) mit der Hauptantriebsmaschine (11) koppelbar ist,
ein zweites Gangschaltteilgetriebe (16) mit einer Eingangswelle (18) und einer Abtriebswelle (24) und einer zweiten Gruppe von Gangschaltzahnradpaaren mit jeweils einem mit seiner Welle drehfest verbundenen Zahnrad und einem schaltbar mit seiner Welle koppelbaren Schaltrad, dessen Eingangswelle (18) mit der Zusatzantriebsmaschine (12) antriebsverbunden ist, wobei die Gangschaltzahnradpaare in der Gangfolge jeweils abwechselnd einem der Gangschaltteilgetriebe (15, 16) zugeordnet sind und die beiden Eingangswellen (17, 18) über eine Kupplungseinheit (29) drehfest miteinander verbindbar sind.

4. Hybridantriebssystem nach Anspruch 3,
**dadurch gekennzeichnet,**
**daß** die Hauptantriebsmaschine (11) über eine Reibungskupplung (14) mit der
ersten Eingangswelle (17) koppelbar ist.

5. Hybridantriebssystem nach einem der Ansprüche 3 oder 4,
**dadurch gekennzeichnet,**
**daß** die Zusatzantriebsmaschine (12) über ein Zahnrad (20) mit einem auf der zweiten Eingangswelle (18) fest angeordneten Zahnrad (19) gekoppelt ist, wobei die Zahnräder (20, 19) eine Getriebestufe bilden.

6. Hybridantriebssystem nach einem der Ansprüche 3 bis 5,
**dadurch gekennzeichnet,**
**daß** eine Nebenabtriebsmaschine (13), insbesondere ein Klimaanlagenkompressor über ein Zahnrad (21) mit einem auf der zweiten Eingangswelle (18) fest angeordneten Zahnrad (19) gekoppelt ist, wobei die Zahnräder (21, 19) eine Getriebestufe bilden.

7. Hybridantriebssystem nach einem der Ansprüche 3 bis 6,
**dadurch gekennzeichnet,**
**daß** die beiden Eingangswellen (17, 18) in koaxialer Anordnung liegen und über eine koaxial angeordnete Kupplungseinheit (29) miteinander koppelbar sind (Figuren 1 bis 9).

8. Hybridantriebssystem nach Anspruch 7,
**dadurch gekennzeichnet,**
**daß** die beiden Abtriebswellen (23, 24) einstückig miteinander verbunden sind (Figuren 1 bis 9).

9. Hybridantriebssystem nach einem der Ansprüche 3 bis 6,
**dadurch gekennzeichnet,**
**daß** die beiden Eingangswellen (17, 18) parallel zueinander liegen und die Kupplungseinheit (29) koaxial auf einer der Eingangswellen angeordnet ist und auf ein auf dieser Eingangswelle angeordnetes Schaltrad (50) einwirkt, das mit einem auf der anderen Eingangswelle fest angeordneten Zahnrad (45) ein Zahnradpaar bildet (Figuren 9 bis 16).

10. Hybridantriebssystem nach Anspruch 9,
**dadurch gekennzeichnet,**
**daß** die beiden Abtriebswellen (23, 24) jeweils parallel zu ihrer Eingangswelle (17, 18) angeordnet sind und jeweils über Festräder (22₁, 22₂) mit einem einzelnen Abtriebsrad (28) gekoppelt sind (Figuren 9 bis 16).

11. Hybridantriebssystem nach einem der Ansprüche 3 bis 10,
**dadurch gekennzeichnet,**
**daß** das erste Gangschaltteilgetriebe (15) zumindest die Gänge 1 und 3 umfaßt und das zweite Gangschaltteilgetriebe (16) zumindest die Gänge 2 und 4 umfaßt.

12. Hybridantriebssystem nach Anspruch 11,
**dadurch gekennzeichnet,**
**daß** das erste Gangschaltteilgetriebe (15) einen 5- Gang und bevorzugt einen Rückwärtsgang umfaßt und daß das zweite Gangschaltteilgetriebe (16) einen 6. Gang umfaßt.
